# FASCICULE DE BREVET EUROPEEN

(11) **EP 1 421 846 B1**
(45) Date de publication et mention de la délivrance du brevet: **27.06.2007**
(21) Numéro de dépôt: 02406005.5
(22) Date de dépôt: 20.11.2002
(51) Int. Cl.: A01K 1/01

(54) **Bac pour animal de compagnie**
Haustiertoilette
Tray for pet

(43) Date de publication de la demande: 26.05.2004
(73) Titulaire: Chessex, Francoise, 1004 Lausanne (CH)
(72) Inventeur: Chessex, Francoise, 1004 Lausanne (CH)
(74) Mandataire: Reuteler, Raymond Werner

(56) Documents cités:
- WO-A-02/071837
- GB-A- 2 346 534
- US-A- 4 890 576
- US-A- 5 203 282
- US-A- 5 566 641
- US-A- 5 730 085

## Description

La présente invention concerne un bac pour animal de compagnie.

Les petits animaux de compagnie élevés en appartement, tels chats, petits chiens, lapins cobayes ou autres, utilisent généralement pour leurs besoins un bac, habituellement en plastique et couramment partiellement rempli d'une litière constituée d'un produit absorbant comme de la sciure, des copeaux de bois, de la paille, du sable ou tout autre produit, naturel ou synthétique, apte à absorber les urines de l'animal ou des animaux utilisant ce bac.

Le nettoyage régulier d'un tel bac est une opération fastidieuse et surtout peu hygiénique. En effet, après avoir transvasé le produit absorbant souillé dans une poubelle, le bac est à nettoyer manuellement à l'aide d'une douche ou d'un jet, ce qui disperse les souillures dans le local, cuisine ou salle de bain, où se fait ce nettoyage. Par ailleurs, l'animal grattant le fond du bac avec ses griffes, des griffures apparaissent sur le fond, dans lesquelles les déchets s'incrustent, difficiles à nettoyer, faisant qu'à la longue le bac prend une odeur fort désagréable. Un tel bac, mal nettoyé, peut en outre être un moyen de propagation de maladies et parasites, tant vers l'homme chargé de nettoyer le bac que vers un autre animal utilisant le même bac.

Un premier but de l'invention est donc de proposer un bac pour animal de compagnie amélioré, c'est-à-dire exempt des défauts mentionnés connus des bacs de l'art antérieur.

Un autre but de l'invention est de proposer un bac pour animal de compagnie facile d'utilisation et ne nécessitant pas d'opération particulière de nettoyage.

Un autre but de l'invention est de proposer un bac pour animal de compagnie qui soit hygiénique à l'emploi.

Encore un autre but de l'invention est de proposer un bac pour animal de compagnie ne dégageant pas d'odeur désagréable.

Encore un autre but de l'invention est de proposer un bac pour animal de compagnie dont l'utilisation soit peu onéreuse.

Enfin encore un autre but de l'invention est de proposer un set prêt à la vente, comprenant plusieurs bacs, afin de faciliter les opérations d'achat et de mise en oeuvre d'un tel bac.

Ces différents buts sont obtenus par un bac pour animal de compagnie tel que décrit dans la revendication principale, des formes d'exécution particulières et variantes étant décrites dans les revendications dépendantes.

L'invention est décrite plus en détail ci-dessous, cette description étant à considérer en regard du dessin annexé comportant les figures où :
la figure 1 est une vue générale d'un bac pour animal de compagnie selon l'invention en cours d'usage,
la figure 2 est une vue en coupe d'un bac pour animal de compagnie conditionnée pour l'achat, selon une première forme de l'invention,
la figure 3 est une vue en coupe d'un bac pour animal de compagnie sous forme conditionnée pour l'achat, selon une deuxième forme de l'invention, et
la figure 4 est une vue générale d'un bac pour animal de compagnie après usage, prêt à être jeté ou détruit.

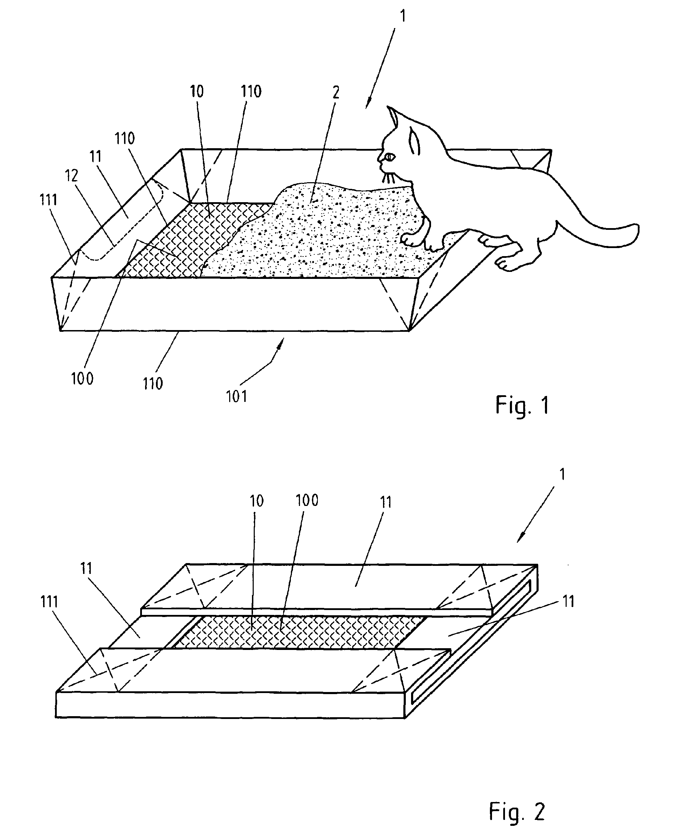

Le bac 1 de la figure 1 est ici de forme tronconique, de section rectangulaire, ouvert vers le haut, étant composé d'un fond 10 et de parois 11 s'élevant au dessus du fond de manière à former un récipient. Dans l'exemple représenté, les parois 11 sont disposées obliquement, le fond 10 constituant la section minimum du tronc de cône, mais il serait tout aussi possible d'avoir des parois 11 verticales. Le bac 1 est partiellement rempli d'une litière 2 absorbante.

Contrairement aux bacs connus en plastique, le bac 1 selon l'invention est constitué à partir d'un matériau dégradable comme par exemple du carton. Le carton ou le matériau constituant les parois 11 et le fond 10 peut être laissé naturel ou alors être laminé, au moins partiellement, ce qui améliore l'étanchéité du bac et diminue l'absorption d'urine. De plus, les parois 11 sont rabattables sur le fond 10, par des lignes de pliage 110 et 111 de manière à présenter un volume minimum lors de l'achat ou pour l'élimination du bac comme on le verra plus bas.

Le fond 10 présente en outre de préférence une surface supérieure 100, respectivement la surface du fond 10 placée directement sous la litière 2 et partiellement visible sur la figure 1, qui est de constitution relativement dure, de manière à ne pas s'abîmer sous l'action des griffes de l'animal. Cette surface supérieure dure 100 peut être obtenue par une feuille mince en un matériau plus dur que le carton, par exemple un matériau synthétique, posée ou collée sur le fond 101 de carton, ou alors par un enduit durcissant disposé sur le fond 101 de carton. Ainsi, durant la période d'utilisation du bac, l'animal ne pourra abîmer suffisamment le fond 10, respectivement la surface dure 100, de manière à ce qu'elle s'imprègne d'odeurs.

La surface supérieure dure 100 du fond 10 est en outre non lisse ou granuleuse. Ainsi l'animal en grattant le fond s'use les griffes selon un processus connu nécessaire à son entretien. A cet effet, la feuille ou la couche constituant la surface dure 100 peut contenir des particules dures, comme par exemple du sable afin de constituer une couche abrasive. Le fait de fournir à l'animal un endroit déterminé où user ses griffes permet avantageusement d'éviter que cet animal n'utilise les meubles ou autres parties dommageables à cet effet.

Un autre avantage d'utiliser un matériau tel que du carton pour la confection d'un tel bac plutôt que du plastique est la possibilité de prévoir une ligne de déchirure 12, dont un exemple de forme et de position est visible sur une paroi 11 de la figure 1, permettant de retirer une portion de paroi dans le cas où l'animal, de petite taille, aurait de la peine à franchir la hauteur complète de la paroi 11.

La figure 2 montre un bac 1, tel que conditionné lors de l'achat. Les parois 11 sont repliées sur le fond 10 par les lignes de pliage 110 et 111. De préférence, plusieurs de ces bacs 1 sont conditionnés en un seul paquet pour l'achat" étant empilés les uns sur les autres dans un emballage commun.

Après achat, l'utilisateur retire donc un bac 1 de l'emballage, déplie les parois 11 et les assemble, selon une technique connue, de manière à former un bac 1 stable, puis emplit partiellement le volume intérieur du bac 1 par le produit absorbant 2 acheté séparément.

L'animal de compagnie peut utiliser le bac durant une certaine période, les excréments étant éliminés régulièrement de manière conventionnelle. Après une semaine par exemple, lorsque le produit absorbant 2 est imbibé d'urine, ce produit est éliminé de manière conventionnelle, par exemple dans la poubelle ou dans un compost, et le bac 1 est replié sur lui-même pour être éliminé pour incinération ou dans les produits compostables selon les matériaux utilisés pour sa confection.

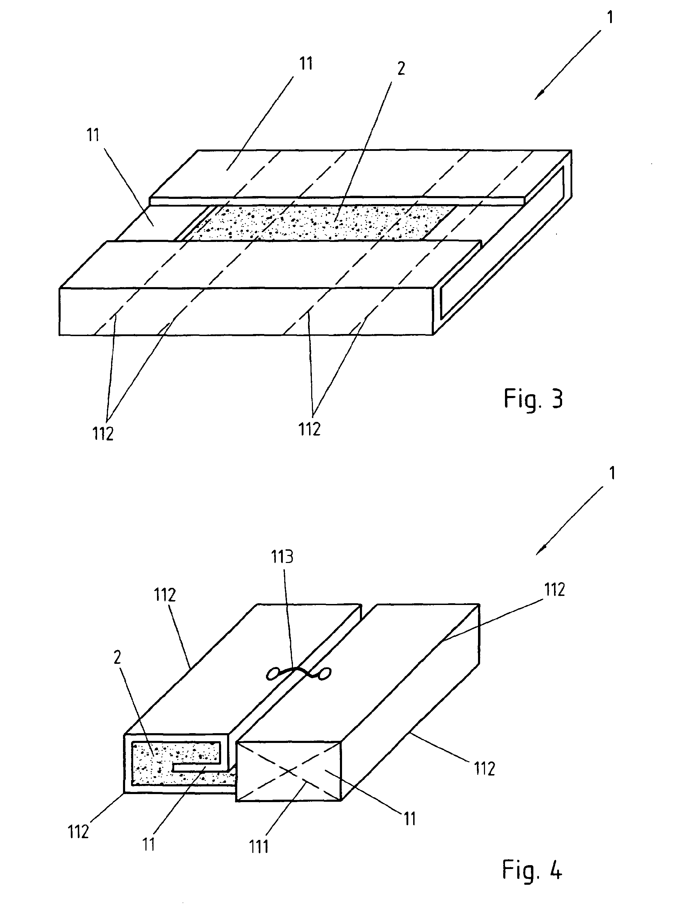

La figure 3 montre une variante du bac 1 lors de sa présentation à l'achat, le produit absorbant 2 étant directement inclus dan le bac 1. De préférence alors chaque bac 1 est alors recouvert d'un emballage particulier, par exemple une feuille de cellophane ou autre, de manière à ce que le produit 2 ne s'échappe pas de la surface libre disposée entre les parois 11 repliées. Un tel bac 1 déjà muni du produit absorbant 2 présente une plus grande épaisseur de paquet lors de l'achat. Comme précédemment il est de préférence conditionné en un emballage de plusieurs bacs. L'avantage de cette variante est qu'il n'est pas nécessaire de se procurer séparément le produit absorbant 2. L'utilisation est semblable à celle décrite plus haut, avec les avantages mentionnés.

La figure 4 montre un bac 1, selon une forme d'exécution particulière, prêt à être éliminé après utilisation. Selon cette forme d'exécution, le fond 10 du bac 1 comprend quelques lignes de pliage supplémentaires 112, parallèles entre elles et espacées sur le fond 10, comme on le voit à la figure 3, de manière à ce que le bac 1, après pliage autour de ces lignes supplémentaires 112 forme un paquet fermé d'encombrement minimum, éventuellement maintenu fermé par une attache 113 prévue à cet effet sur une bordure du fond 10 Ce paquet fermé est facile à éliminer, soit pour incinération ou compostage selon les matériaux utilisés pour sa confection. Les parois 11 comportent elles aussi les plis, lignes ou amorces de pliage nécessaires, non représentées sur les figures, permettant la confection du paquet fermé prêt à l'élimination. La présence des parois 11 repliées empêche en outre que de la litière 2 ne s'échappe par les extrémités du paquet fermé.

A titre d'exemple illustratif, une portion de la paroi 11 a été supprimée du paquet de la figure 4 afin de bien distinguer la manière dont le bac est replié sur lui-même grâce aux lignes de pliage 112. D'autres manières de replier le bac sur lui-même afin de former un paquet d'encombrement réduit, facile à éliminer, sont évidemment envisageables.

Il est évident que cette disposition en paquet fermé d'encombrement minimum peut aussi être prévue pour le conditionnement lors de l'achat, avec l'avantage de former un emballage certainement moins encombrant que l'emballage mentionné précédemment.

Comme déjà mentionné, les matériaux choisis pour confectionner le bac seront de préférence facilement éliminables, soit par incinération ou alors par compostage. Le matériau constituant la litière absorbante 2 sera choisi en conséquence.

Les dimensions du fond 10 et des parois 11 sont choisies et adaptées au type d'animal utilisateur ainsi qu'à leur nombre.

Les surfaces des parois 11 peuvent être laissées naturelles ou alors porter un décor et/ou une marque publicitaire et/ou des instructions d'emploi et/ou des conseils pour l'élevage des animaux et/ou toute autre indication qui serait nécessaire ou utile.

L'utilisation de tels bacs facilite donc grandement l'élevage de petits animaux de compagnie en permettant d'éviter les tâches de nettoyage rebutantes. Par ailleurs l'utilisation de tels bacs permet d'améliorer l'état sanitaire des animaux. Ces bacs peuvent être utilisés à domicile ou alors par les cabinets et cliniques vétérinaires ou les élevages et pensions pour animaux, où il est important qu'une maladie, une infection ou un parasite ne puisse se transmettre d'un animal à un autre.

## Revendications

1. Bac (1) pour animal de compagnie, comprenant un fond (10) de forme plane essentiellement quadrilatérale et des parois (11) s'élevant à partir du fond, constitué en un matériau facilement éliminable, chacune des parois (11) étant reliée à une bordure du fond par au moins une ligne de pliage (110), au moins une ligne de pliage supplémentaire (111) reliant chacune des parois à la paroi adjacente, de manière à ce que ledit bac puisse être disposé selon une forme relativement plate lorsque les parois sont repliées sur le fond et selon une forme de récipient creux lorsque les parois sont dépliées ;
**caractérisé en ce que**
la surface supérieure du fond (10) est recouverte d'un matériau dur (100) comprenant une couche abrasive.

2. Bac selon la revendication1, **caractérisé en ce que** les surfaces des parois intérieures dudit bac sont recouvertes d'une couche d'étanchéité.

3. Bac selon l'une des revendications précédentes, **caractérisé en ce qu**'il comprend en outre au moins une ligne de pliage transversale (112) disposée sur la paroi inférieure (101) du fond (10) permettant, en collaboration avec les lignes de pliage (110) et les lignes de pliage supplémentaires (111) de replier ledit bac en un paquet d'encombrement minimum.

4. Bac selon la revendication 3, **caractérisé en ce qu**'il comprend en outre un moyen d'attache (113) permettant de conserver ledit paquet d'encombrement minimum à l'état fermé.

5. Bac selon l'une des revendications précédentes, **caractérisé en ce qu**'il est constitué en des matériaux éliminables par combustion.

6. Bac selon l'une des revendications précédentes, **caractérisé en ce qu'**il est constitué en des matériaux biodégradables.

7. Bac selon l'une des revendications précédentes, **caractérisé en ce qu'**il comprend une ligne de déchirure (12) aménagée sur au moins une paroi (11) permettant, après déchirure et retrait de la portion de paroi limitée par ladite ligne de déchirure, d'offrir un accès de hauteur réduite au bac.

8. Set conditionné pour la vente **caractérisé en ce qu**'il est constitué d'une pluralité de bacs selon l'une des revendications précédentes, à l'état replié de forme relativement plate, disposés dans un emballage commun.

9. Set conditionné pour la vente **caractérisé en ce qu'**il est constitué d'une pluralité de bacs selon l'une des revendications 4 à 7, à l'état fermé d'encombrement minimum, disposés dans un emballage commun.

10. Set selon l'une des revendications 8 ou 9, **caractérisé en ce que** chacun desdits bacs (1) dudit set contient déjà une litière absorbante (2).

## Claims

1. A tray (1) for pet, comprising a bottom (10) with a substantially quadrilateral planar shape and walls (11) rising from the bottom, consisting of an easily disposable material, each of the walls (11) being connected to an edge of the bottom through at least one folding line (110), at least one additional folding line (111) connecting each of the walls to the adjacent wall, so that said tray may be laid as a relatively flat shape when the walls are folded over the bottom and as a hollow container shape when the walls are unfolded;
**characterized in that**
the upper surface of the bottom (10) is covered with hard material (100) comprising an abrasive layer.

2. The tray according to claim 1, **characterized in that** the surfaces of the inner walls of said tray are covered with a sealing layer.

3. The tray according to any of the preceding claims, **characterized in that** it further comprises at least one transverse folding line (112) laid on the lower wall (101) of the bottom (10) allowing, with collaboration with the folding lines (110) and the addition folding lines (111), said tray to be folded back into a packet with minimum bulk.

4. The tray according to claim 3, **characterized in that** it further comprises an attachment means (113) allowing said packet of minimum bulk to be stored away in the closed condition.

5. The tray according to any of the preceding claims, **characterized in that** it consists of materials which may be disposed of by combustion.

6. The tray according to any of the preceding claims, **characterized in that** it consists of biodegradable materials.

7. The tray according to any of the preceding claims,
**characterized in that** it comprises a tearing line (12) arranged on at least one wall (11) providing, after tearing and removal of the wall portion limited by said tearing line, access to the tray with reduced height.

8. A sales-packaged set **characterized in that** it consists of a plurality of trays according to any of the preceding claims, in the folded condition with a relatively flat shape, laid out in a common package.

9. A sales-packaged set **characterized in that** it consists of a plurality of trays according to any of claims 4 to 7, in the closed condition with minimum bulk, laid out in a common package.

10. The set according to any of claims 8 or 9, **characterized in that** each of said trays (1) of said set already contains absorbent litter (2).

## Patentansprüche

1. Haustiertoilette (1), einen ebenen, im wesentlichen vierseitigen Boden (10) und Wände (11) umfassend, die sich vom Boden ausgehend erheben, gebildet aus einem leicht entsorgbaren Material, wobei jede Wand (11) mit einer Bodenkante durch mindestens eine Faltlinie (110) verbunden ist, wobei mindestens eine zusätzliche Faltlinie (111) jede Wand mit der benachbarten Wand verbindet, so dass die besagte Toilette relativ flach anordenbar ist, wenn die Wände über den Boden gefaltet sind, und gemäß einer hohlen Behälterform, wenn die Wände entfaltet sind,
**dadurch gekennzeichnet, dass**
die obere Oberfläche des Bodens (10) mit einem harten Material (100) beschichtet ist, eine Schleifschicht umfassend.

2. Toilette nach Anspruch 1, **dadurch gekennzeichnet, dass** die Oberfläche der Innenwände der besagten Toilette mit einer Abdichtschicht beschichtet sind.

3. Toilette nach einem der vorangehenden Ansprüche, **dadurch gekennzeichnet, dass** sie weiterhin mindestens eine transversale Faltlinie (112) umfasst, die auf der unteren Wand (101) des Bodens (10) angeordnet ist, die es im Zusammenwirken mit den Faltlinien (110) und den zusätzlichen Faltlinien (111) erlaubt, die besagte Toilette zu einem Paket mit minimalem Platzbedarf zusammenzufalten.

4. Toilette nach Anspruch 3, **dadurch gekennzeichnet, dass** sie weiterhin ein Befestigungsmittel (113) umfasst, das es erlaubt, das besagte Paket mit minimalem Platzbedarf geschlossen zu halten.

5. Toilette nach einem der vorangehenden Ansprüche, **dadurch gekennzeichnet, dass** sie aus Materialen besteht, die durch Verbrennen entsorgbar sind.

6. Toilette nach einem der vorangehenden Ansprüche, **dadurch gekennzeichnet, dass** sie aus Materialien besteht, die biologisch abbaubar sind.

7. Toilette nach einem der vorangehenden Ansprüche, **dadurch gekennzeichnet, dass** sie eine Risslinie (12) umfasst, die mindestens auf einer Wand (11) eingearbeitet ist, die es erlaubt, nach Abreißen und Entnahme des von der besagten Risslinie begrenzten Wandabschnitts, einen Zugang verminderter Höhe zur Toilette bereitzustellen.

8. Für den Verkauf verpacktes Set, **dadurch gekennzeichnet, dass** es von einer Mehrzahl von in zusammengefaltetem Zustand relativ flachen Toiletten gemäß einem der vorangehenden Ansprüche gebildet wird, die in einer gemeinsamen Verpackung angeordnet sind.

9. Für den Verkauf verpacktes Set, **dadurch gekennzeichnet, dass** es von einer Mehrzahl von in geschlossenem Zustand minimalen Platz beanspruchenden Toiletten gemäß einem der Ansprüche 4 bis 7 gebildet wird, die in einer gemeinsamen Verpackung angeordnet sind.

10. Set nach einem der Ansprüche 8 oder 9, **dadurch gekennzeichnet, dass** jede der besagten Toiletten (1) des besagten Sets bereits eine absorbierende Streu (2) enthält.
